# NEUE EUROPÄISCHE PATENTSCHRIFT

(11) **EP 0 576 500 B2**
(45) Veröffentlichungstag und Bekanntmachung des Hinweises auf die Entscheidung über den Einspruch: **27.08.2003**
(45) Hinweis auf die Patenterteilung: 07.02.1996
(21) Anmeldenummer: 92906693.4
(22) Anmeldetag: 13.03.1992
(51) Int. Cl.: A61C 7/00, A61C 7/12, A61C 7/10

(54) **HILFSTEIL ZUR KORREKTUR DER ZAHNSTELLUNG**
AUXILIARY ORTHODONTIC APPLIANCE
APPAREIL ORTHODONTIQUE AUXILIAIRE

(30) Priorität: 16.03.1991 EP 91104117
(43) Veröffentlichungstag der Anmeldung: 05.01.1994
(73) Patentinhaber: DENTAURUM J.P. WINKELSTROETER KG, 75228 Ispringen (DE)
(72) Erfinder: SERNETZ, Friedrich, D-7530 Pforzheim (DE)
(74) Vertreter: Hoeger, Stellrecht & Partner
(86) Internationale Anmeldenummer: EP9200559
(87) Internationale Veröffentlichungsnummer: WO92016159

(56) Entgegenhaltungen:
- US-A- 4 197 643
- H. Küpper: Reintitan: Materialeigenschaften und Verarbeitungstechnologien eines Dentalmetalles, "Die Quintessenz", Heft 9, September 1989, S. 1625-1636
- D. Richter et. al.: Die Titan-Suprakonstruktion auf enossalen Implantaten, "Die "Quintessenz", Heft 12, Dezember 1990, S. 1965-1977
- Jakob Wirtz: Klinische Bewährung von Legierungen (II), "Die Quintessenz", Heft 12, Dezember 1990, S. 2039-2044
- J. Geis-Gerstorfer et. al.: Grundsätzliches zur Methodik potentiodynamischer Polarisationsmessungen an Dentallegierungen in künstlichen Speicheln, Deutsche Zahnärztl. Zeitschrift 42, 1987, S. 91-97

## Beschreibung

Die Erfindung betrifft ein Hilfsteil zur Korrektur der Zahnstellung beim Menschen, wobei es sich um ein orthodontisches oder ein kieferorthopädisches Hilfsteil handeln kann. Nach dem Fachsprachgebrauch handelt es sich bei einem solchen Hilfsteil um einen zeitlich begrenzt im Mund verbleibenden Gegenstand in Form einer Dehnschraube, eines Brackets, eines Bukkalröhrchens oder eines ringförmigen Zahnbandes. Dehnschrauben werden sowohl zur Dehnung des menschlichen Kiefers, als auch zur Korrektur der Stellung eines oder mehrerer Zähne eingesetzt, Brackets und Bukkalröhrchen dienen gleichfalls der Korrektur der Zahnstellung und werden auf den Zähnen befestigt, gegebenenfalls mittels eines ringförmigen, den betreffenden Zahn umfassenden Bandes.

Eine Dehnschraube besteht üblicherweise aus zwei Schraubenkörperteilen und einer Gewindespindel, welche zu beiden Seiten eines im Zentrum der Gewindespindel vorgesehenen Spindelkopfs mit gegenläufigen Gewinden versehen ist und in entsprechende Gewindebohrungen der beiden Schraubenkörperteile eingreift, so daß sich durch Drehen der Gewindespindel die beiden Schraubenkörperteile relativ zueinander verstellen lassen. Gegebenenfalls können noch Führungsmittel, inbesondere in Form von Führungsstiften, vorgesehen sein, durch die verhindert wird, daß sich beim Drehen der Gewindespindel die beiden Schraubenkörperteile gegeneinander verdrehen. Die verschiedenen Teile bisher bekannt gewordener Dehnschrauben bestehen aus Edelstahl oder aus Neusilberlegierungen. Für die Herstellung von Brackets und Bukkalröhrchen wurde gleichfalls Edelstahl verwendet, es sind aber auch Keramik- und Kunststoff-Brackets bekannt, welche jedoch hinsichtlich ihrer Festigkeit nicht voll befriedigen; ein einstückiges und insgesamt aus einem Keramikmaterial bestehendes Bracket ist aus der EP-A-0 297 908 bekannt.

Obwohl es schon seit langem bekannt ist, daß Edelstahl und Neusilber für diese Einsatzzwecke nicht hinreichend korrosionsbeständig sind und insbesondere wegen ihres Nickelanteils allergische Reaktionen auslösen können, hat bislang weltweit kein einziger Hersteller derartiger Hilfsteile Dehnschrauben, Brackets oder Bukkalröhrchen auf den Markt gebracht, die die vorstehend geschilderten Nachteile nicht aufweisen.

Da die in Rede stehenden Hilfsteile im Mund getragen werden, besteht ein ganz beträchtliches Problem darin, das Auftreten einer elektrochemischen Korrosion des Hilfteils zu vermeiden. Z. B. im Hinblick auf Zahnfüllungen aus Amalgamen konnten die bisher bekannt gewordenen metallischen Hilfsteile auch in dieser Hinsicht nicht voll befriedigen. So kann z. B. bei Dehnschrauben aus Neusilber mit Führungsstiften und Gewindespindeln aus Edelstahl die elektrochemische Korrosion in wenigen Tagen erfolgen, wenn die aus Neusilber hergestellten Teile nicht durch eine Chrom- oder Nickelbeschichtung geschützt sind.

Der Erfindung lag die Aufgabe zugrunde, Hilfsteile der in Rede stehenden Art zu schaffen, die auch dann nicht zu Problemen führen, wenn bei ihrem Träger schon eine restaurative Zahnbehandlung stattgefunden hat, und erfindungsgemäß läßt sich diese Aufgabe dadurch lösen, daß das Hilfsteil aus einer Titanbasislegierung besteht und seine Oberflächen von einer Haut aus Titanoxid gebildet werden, deren elektrisches Durchbruchspotential in synthetischem Speichel mit einem P_{H}-Wert von 2,3 bei 37°C größer als 2000 mV ist.

Titan und Titanlegierungen werden zwar schon seit langem für hochwertige technische Teile, wie z. B. Uhrengehäuse, wegen ihrer Biokompatibilität aber auch für Implantate als Werkstoffe verwendet, trotz der vorstehend aufgezeigten und schon seit langem bekannten Schwierigkeiten wurden aber bislang weltweit Dehnschrauben, Brackets und Bukkalröhrchen niemals aus Titan oder Titanbasislegierungen hergestellt. Bei diesen Hilfsteilen zur Korrektur der Zahnstellung handelt es sich um ausgesprochene Massenprodukte, in deren Herstellung diese Werkstoffe keinen Eingang gefunden haben, obwohl sich Titan und seine Legierungen durch die verfügbaren Zerspanwerkzeuge durchaus wirtschaftlich bearbeiten lassen, Titan und seine Legierungen auch als feine Pulver erhältlich sind, so daß sich die fraglichen Hilfsteile auch durch Metall-Spritzformen wirtschaftlich herstellen lassen, und obwohl Formmassen zur Verfügung stehen, mit deren Hilfe sich Titan und seine Legierungen auch im Feinguß wirtschaftlich vergießen lassen.

Überraschenderweise wurde festgestellt, daß eine vorstehend definierte Titanoxidhaut die erfindungsgemäßen, im Mund zu tragenden Hilfsteile selbst dann hinreichend passiviert, wenn ihr Träger auch Zähne besitzt, die mit einer prothetischen Versorgung aus einer hochgoldhaltigen Legierung versehen sind, was als weiterer Vorteil zu der bekannten Biokompatibilität von Titan und Titanbasislegierungen hinzutritt.

Zur Messung des Durchbruchspotentials der z. B. durch anodische Oxidation oder Temperung in sauerstoffhaltiger Atmosphäre herstellbaren Oxidhaut sollten ein synthetischer Speichel nach DIN 13912 sowie eine Meßzelle nach ASTM (siehe G5-Rec. Practice for Standard Reference Method for making Potentiostatic and Potentiodynamic Anodic Polarisation Measurements, 1980 Annual Book of ASTM Standard, Part 10) verwendet werden; in diesem Zusammenhang sei auch auf den Aufsatz "Grundsätzliches zur Methodik potentiodynamischer Polarisationsmessungen an Dentallegierungen in künstlichen Speicheln" von J. Geis-Gerstorfer und H. Weber, Deutsche Zahnärztliche Zeitschrift 42, 1987, Seiten 91 - 97, verwiesen.

Unter Titanbasislegierungen sollen hochlegierte Titanlegierungen gemäß DIN 17851 verstanden werden.

Aus der FR-A-2 318 617 geht schon ein Implantat hervor, welches einen Grundkörper aus einer Titanbasislegierung besitzt, der mit einer keramischen Beschichtung versehen ist, welche aus Titanoxyd bestehen kann. Bei dem Implantat soll es sich um ein solches für einen Knochen, für ein Gelenk oder für eine Wurzel eines Zahnes handeln, so daß dieses Implantat stets von Knochenteilen oder anderem Gewebe umgeben ist und somit völlig andere Verhältnisse gegeben sind als bei einem Hilfsteil zur Korrektur der Zahnstellung, welches im Hinblick auf den Speichel sowie Zahnfüllungen und dergleichen der Gefahr elektrochemischer Korrosionsprozesse ausgesetzt ist.

Ein besonderer Vorteil der erfindungsgemäßen Maßnahme ergibt sich bei Dehnschrauben, bei denen an die Festigkeit der Gewindespindel höhere Anforderungen gestellt werden müssen als an diejenige der Schraubenkörperteile. Bei bekannten Dehnschrauben, deren Gewindespindel aus einem Werkstoff höherer Festigkeit besteht als die Schraubenkörperteile, konnte die galvanische Korrosion der aus Neusilber gefertigten Teile nur durch deren Beschichtung mit Nickel oder Chrom vermindert werden. Bei einer erfindungsgemäßen Dehnschraube läßt sich hingegen allein durch die Auswahl verschiedener Titanwerkstoffe die jeweils benötigte Festigkeit von Schraubenkörperteilen und Gewindespindel erreichen. Dennoch ist bei einer erfindungsgemäßen Dehnschraube stets die Allergie-Unbedenklichkeit gegeben, was bei den bekannten Dehnschrauben aus Edelstahl oder aus Neusilber mit einem Nickelüberzug nicht der Fall ist.

In der beigefügten Zeichnung sind drei Ausführungsformen des erfindungsgemäßen Hilfsteils perspektivisch dargestellt, und zwar in
- Fig. 1:: eine Dehnschraube, in
- Fig. 2:: ein Bracket, und in
- Fig. 3:: ein Bukkalröhrchen.

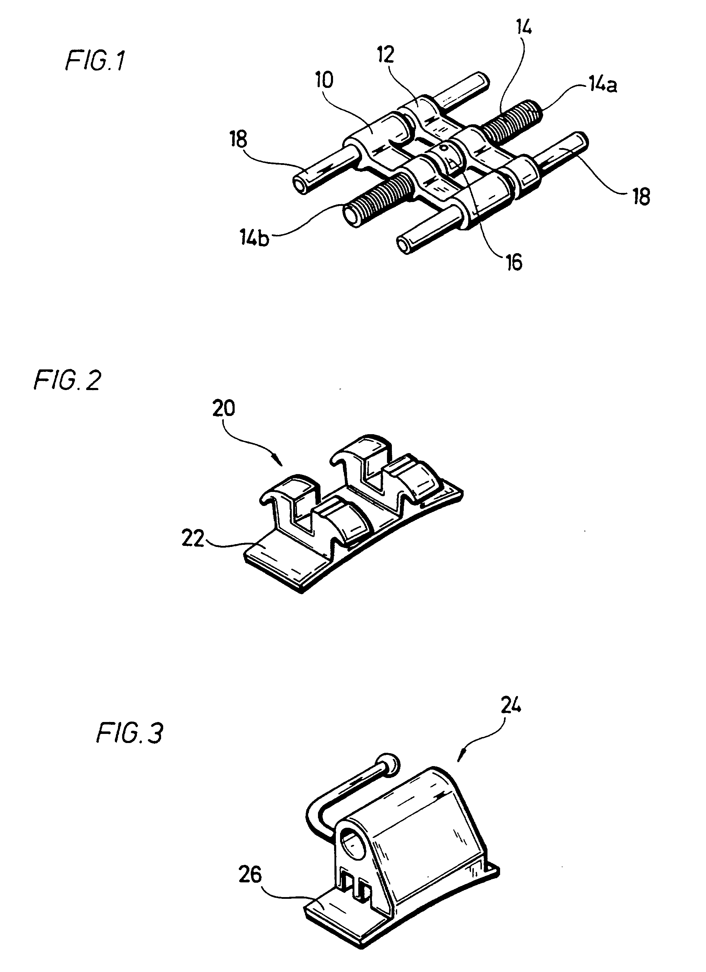

Die in Fig. 1 gezeigte Dehnschraube besteht aus einem ersten und einem zweiten Schraubenkörperteil 10 bzw. 12, einer Gewindespindel 14 mit Spindelkopf 16 und zwei Führungsstiften 18. Die Gewindespindel 14 besitzt zu beiden Seiten des Spindelkopfs 16 Spindelabschnitte 14a und 14b mit gegenläufigen Gewinden, welche in entsprechende Gewindebohrungen der Schraubenkörperteile 10 und 12 eingreifen, so daß sich durch Drehen der Gewindespindel 14 der Abstand der beiden Schraubenkörperteile 10, 12 voneinander verändern läßt. Die beiden Führungsstifte 18 können jeweils in einem der beiden Schraubenkörperteile 10, 12 festgelegt sein, da sie primär verhindern sollen, daß sich beim Drehen der Gewindespindel 14 die beiden Schraubenkörperteile 10, 12 gegeneinander verdrehen. Eine Querbohrung 16a im Spindelkopf 16 ermöglicht das Einstecken eines Werkzeugs zum Betätigen der Gewindespindel 14.

Die Fig. 2 zeigt ein als Ganzes mit 20 bezeichnetes Bracket mit einer Basis 22, die Fig. 3 ein als Ganzes mit 24 bezeichnetes Bukkalröhrchen mit einer Basis 26, die ebenso wie die Basis 22 des Brackets 20 der Befestigung des Bukkalröhrchen bzw. des Brackets auf einem Zahn dient. Sowohl das Bracket, als auch das Bukkalröhrchen bedürfen keiner näheren Beschreibung, da die Gestaltung dieser Hilfsteile bekannt ist und sich die letzteren von den bekannten Hilfsteilen nur im Werkstoff und in dem Merkmal unterscheiden, daß ihre Oberflächen mit einer dünnen Haut aus Titanoxid überzogen sind.

Wenn vorstehend von einer Titanbasislegierung die Rede ist, so bedeutet dies, daß diese Legierung mehr als 50 Gewichtsprozent Titan enthält. Die Oxidhaut läßt sich ohne weiteres in einer oxidierenden Atmosphäre erzielen, wobei sich die Dicke der Oxidschicht z. B. dadurch steuern läßt, daß man die Zusammensetzung der oxidierenden Atmosphäre, die Behandlungstemperatur und/oder die Dauer der Behandlung verändert - schon durch eine kurzzeitige Erwärmung der Hilfsteile in Luft läßt sich eine relativ dicke Oxidschicht erzeugen, ohne daß ein Festigkeitsverlust der Teile in Kauf genommen werden muß.

## Patentansprüche

1. Hilfsteil zur Korrektur der Zahnstellung in Form einer Dehnschraube (10, 12, 14), eines Brackets (20) oder eines Bukkalröhrchens (24) oder eines ringförmigen Zahnbandes, **dadurch gekennzeichnet, dass** das Hilfsteil (10, 12, 14; 20; 24) aus einer Titanbasislegierung, die mehr als 50 Gew.% Titan enthält, besteht und seine Oberflächen von einer Haut aus Titanoxid gebildet werden, deren elektrisches Durchbruchspotential in synthetischem Speichel mit einem pH-Wert von 2,3 bei 37 °C größer als 2000 mV ist.

2. Hilfsteil (10, 12, 14; 20; 24) nach Anspruch 1, **dadurch gekennzeichnet, dass** seine Bestandteile als Spritzformteile ausgebildet sind.

3. Hilfsteil (10, 12, 14; 20; 24) nach Anspruch 1, **dadurch gekennzeichnet, dass** seine Bestandteile als Feingussteile ausgebildet sind.

4. Hilfsteil zur korrektur der Zalunstellung in Form einer Dehnschraube (10, 12, 14), welche zwei mittels einer Gewindespindel (14) gegeneinander verstellbare Schraubenkörperteile (10, 12) besitzt, wobei die Dehnschraube (10, 12, 14) aus einem Titanwerkstoff besteht, ausgewählt aus einer Titanbasislegierung, und ihre Oberflächen von einer Haut aus Titanoxid gebildet werden, deren elektrisches Durchbruchspotential in synthetischem Speichel mit einem pH-Wert von 2,3 bei 37 °C größer als 2000 mV ist, und wobei die Gewindespindel (14) aus einem Titanwerkstoff höherer Festigkeit besteht als die Schraubenkörperteile.

5. Dehnschraube (10, 12, 14) nach Anspruch 4, **dadurch gekennzeichnet, dass** ihre Bestandteile als Spritzformteile ausgebildet sind.

6. Dehnschraube (10, 12, 14) nach Anspruch 4, **dadurch gekennzeichnet, dass** ihre Bestandteile als Feingussteile ausgebildet sind.

## Claims

1. Auxiliary orthodontic appliance in the form of an expansion screw (10, 12, 14), a bracket (20) or a buccal tube (24) or a ring-shaped tooth band, **characterized in that** the auxiliary appliance (10, 12, 14; 20; 24) consists of an alloy on the basis of titanium containing more than 50 % by weight titanium, and its surfaces are formed by a titanium oxide skin with an electrical breakdown potential greater than 2000 mV in synthetic saliva having a pH value of 2.3 at 37° C.

2. Auxiliary appliance (10, 12, 14; 20; 24) as defined in claim 1, **characterized in that** its components are in the form of injection moulded parts.

3. Auxiliary appliance (10, 12, 14; 20; 24) as defined in claim 1, **characterized in that** its components are in the form of precision castings.

4. Auxiliary orthodontic appliance in the form of an expansion screw (10, 12, 14) comprising two screw body parts (10, 12) adjustable relative to one another by means of a threaded spindle (14), the expansion screw (10, 12, 14) consisting of a titanium material selected from an alloy on the basis of titanium, and its surfaces being formed by a titanium oxide skin with an electrical breakdown potential greater than 2000 mV in synthetic saliva having a pH value of 2.3 at 37° C, and the threaded spindle (14) consisting of a titanium material of higher strength than the screw body parts.

5. Expansion screw (10, 12, 14) as defined in claim 4, **characterized in that** its components are in the form of injection moulded parts.

6. Expansion screw (10, 12, 14) as defined in claim 4, **characterized in that** its components are in the form of precision castings.

## Revendications

1. Pièce auxiliaire pour corriger la position des dents sous forme d'une vis extensible (10, 12, 14), d'un bracket (20) ou d'un petit tube buccal (24) ou d'une bande dentaire annulaire, **caractérisée en ce que** la pièce auxiliaire (10, 12, 14, 20, 24) se compose d'un alliage à base de titane ayant une teneur en titane de plus de 50 % en poids, et **en ce que** ses surfaces sont formées d'une pellicule d'oxyde de titane dont le potentiel de rupture électrique dans la salive synthétique ayant un pH de 2,3 à 37 °C est supérieur à 2000 mV.

2. Pièce auxiliaire (10, 12, 14, 20, 24) selon la revendication 1, **caractérisée en ce que** ses composants sont formés avec un moule à injection.

3. Pièce auxiliaire (10, 12, 14, 20, 24) selon la revendication 1, **caractérisée en ce que** ses composants sont des pièces produites par coulage de précision.

4. Pièce auxiliaire pour corriger la position des dents sous forme d'une vis extensible (10, 12, 14) qui possède deux parties vissables (10, 12) pouvant être déplacées l'une par rapport à l'autre au moyen d'un broche filetée (14), moyennant quoi la vis extensible (10, 12, 14) se compose d'une pièce de titane choisie dans un alliage à base de titane, et ses surfaces sont formées d'une pellicule d'oxyde de titane dont le potentiel de rupture électrique dans la salive synthétique ayant un pH de 2,3 à 37 °C est supérieur à 2000 mV, et moyennant quoi la broche filetée (14) se compose d'une pièce de titane de résistance supérieure à celle des pièces vissées.

5. Vis extensible (10, 12, 14) selon la revendication 4, **caractérisée en ce que** ses composants sont formés avec un moule à injection.

6. Vis extensible (10, 12, 14) selon la revendication 4, **caractérisée en ce que** ses composants sont des pièces produites par coulage de précision
